Europäisches Patentamt

European Patent Office

Office européen des brevets

(11) Veröffentlichungsnummer: **0 464 418 A2**

# EUROPÄISCHE PATENTANMELDUNG

(21) Anmeldenummer: **91109667.5**

(22) Anmeldetag: **13.06.91**

(51) Int. Cl.⁵: **H04M 3/64**, G09G 3/00

(30) Priorität: **04.07.90 DE 4021333**

(43) Veröffentlichungstag der Anmeldung:
**08.01.92 Patentblatt 92/02**

(84) Benannte Vertragsstaaten:
**AT BE CH FR GB IT LI LU NL**

(71) Anmelder: **TELENORMA GMBH**
**Mainzer Landstrasse 128-146**
**W-6000 Frankfurt/Main(DE)**

(72) Erfinder: **Moser, Hardy**
**Freischützstrasse 110**
**W-8000 München 81(DE)**

(54) **Schaltungsanordnung zur Ansteuerung von matrixförmig angeordneten Anzeigeelementen.**

(57) Für matrixförmig angeordnete Anzeigelemente an Vermittlungsapparaten oder Vermittlungsplätzen von Kommunikations-Vermittlungsanlagen soll eine Schaltungsanordnung vorgestellt werden, womit der Steuerungs- und Speicheraufwand auch bei einer größeren Anzahl von Anzeigeelementen in vertretbaren Grenzen gehalten wird. Die Anzeigefelder sollen blockweise erweiterbar sein, ohne daß zusätzlicher Steuerungsaufwand entsteht, wobei lediglich zusätzliche Speicher angeordnet werden müssen.

Es ist ein vom Vermittlungsapparat oder -platz gesteuerter aber selbsttätig arbeitender Anzeigemodul vorgesehen, der ein Empfangsregister, einen Zustandsspeicher, einen Spaltenspeicher und eine Steuereinrichtung enthält. Der Zustandsspeicher wird zyklisch angesteuert, wobei der Inhalt einer jeden Zeile vorübergehend in den Spaltenspeicher geladen wird. Die Diodenzeilen und die Diodenspalten einer Leuchtdiodenmatrix werden koinzidierend mit Strom beschickt, damit die die gewünschten Anzeigeelemente aufleuchten. Nur bei Änderungen des Anzeigezustandes werden Befehle im Empfangsregister empfangen, welche über die Steuereinrichtung zu einer Umwerteeinrichtung gelangen. Dort wird bei einem Einschaltbefehl für ein Anzeigeelement, dessen Einzeladresse mit dem aus dem Zustandsspeicher ausgelesenen Zustand verknüpft. Bei einem Ausschaltbefehl wird die invertierte Einzeladresse des betreffenden Anzeigeelementes mit dem vorigen Zustand verknüpft. Der jeweils neue Zustand wird in den Zustandsspeicher übertragen.

Diese Schaltungsanordnung ist als selbsttätig arbeitende Anzeigeeinrichtung für Vermittlungsapparate oder Vermittlungsplätze ausgelegt, wobei eine Informationsübertragung nur dann stattfinden muß, wenn sich am Zustand der Anzeigeelemente etwas ändert. Auch bei einer größeren Anzahl von Anzeigeelementen ist der Steuerungs- und Speicheraufwand relativ gering, und bei Erweiterungen müssen lediglich zusätzliche Speicher aufgewendet werden.

Fig. 1

Die Erfindung betrifft eine Schaltungsanordnung zur Ansteuerung von matrixförmig angeordneten Anzeigeelementen nach dem Oberbegriff des Patentanspruchs 1.

Aus der DE-OS 24 08 230 ist eine Schaltungsanordnung zur Anzeige des Besetztzustandes der Anschlußleitungen am Vermittlungsplatz einer Fernmelde-, insbesondere Fernsprech-Nebenstellenanlage bekannt. Als Anzeigeelemente werden Leuchtdioden verwendet, welche gruppenweise angeordnet sind. Jedes einzelne Anzeigeelement hat eine einzelne Speichereinrichtung, welche als Flip-Flop ausgebildet ist. Jedem dieser Flip-Flops ist eine Verknüpfung vorgeschaltet, so daß dieses eingeschaltet werden kann, wenn zu einem vorbestimmten Taktzeitpunkt eine Einschaltinformation vorliegt. Die Flip-Flops müssen zu Beginn der jeweiligen Abtastperiode für die betreffende Gruppe gruppenweise zurückgestellt werden. Zur Erzeugung dieser Rückstellimpulse sind besondere Zähleinrichtungen erforderlich. Zur Übertragung der Einschaltbefehle für die einzelnen Flip-Flops sind insgesamt drei Leitungen erforderlich. Dies ist schon ein erheblicher Fortschritt gegenüber dem damals bekannten Stand der Technik, wonach bei einer matrixartigen Ansteuerung von Lampen in einem Anzeigefeld mit hundert Anzeigeorganen zwanzig Kennzeichnungsleitungen notwendig gewesen sind, wie dies auf Seite 2 beschrieben wird.

Für die Steuerung der Anzeigeorgane, wie dies in der vorgenannten Offenlegungsschrift angegeben ist, ist ein erheblicher Aufwand pro Anzeigeorgan erforderlich. Bei Erweiterungen müssen zusätzliche Zähler und Decodierungen vorgesehen werden. Außerdem muß die Sendeeinrichtung an der Vermittlungsanlage die zu übertragenden Informationen auf den genannten drei Leitungen so anbieten, wie dies durch die Decodierung vorgegeben ist, welche bei einer derartigen Schaltungsanordnung nicht ohne weiteres geändert werden kann.

Eine Schaltungsanordnung für eine zentral gesteuerte Fernmelde-, insbesondere Fernsprech-Nebenstellenanlage zur Erzeugung von Steuerinformationen für die Anzeigeelemente von Abfrageplätzen ist aus der DE-OS 27 51 712 bekannt. Mit dieser Schaltungsanordnung werden Befehle und Adressen gebildet, welche seriell über eine einzige Leitung zu einem Vermittlungsplatz übertragen werden. Der für eine Anzeigeeinrichtung bestimmte Befehl gibt an, ob ein Anzeigeorgan eingeschaltet oder ausgeschaltet werden soll. Mit einer Adresse, welche aus einer Blockadresse und einer Einzeladresse besteht, wird angegeben, an welchem Anzeigeelement sich ein Zustand ändern soll. Da diese Schaltungsanordnung sich ausschließlich mit der Erzeugung von Steuerinformationen für die Anzeigeelemente von Abfrageplätzen befaßt, ist nicht angegeben, auf welche Weise die empfangenen Informationen bei einem Abfrageplatz dazu benutzt werden, die Anzeigeelemente einzuschalten.

Aus der DE-PS 27 17 748 ist ein Steuersystem für einen Bedienungstisch einer Fernsprech-Vermittlungsanlage bekannt. Ein Teil des dort beschriebenen Steuersystems ist dafür vorgesehen, die Informationen für Anzeigeelemente bitseriell zu übertragen, damit auf der Empfangsseite die Anzeigeeinrichtungen gesteuert werden können. Um zu erreichen, daß ein stetig andauernder Anzeigezustand besteht, ist für jeweils eine Gruppe von Anzeigeelementen ein Schieberegister vorgesehen. Diese Schieberegister nehmen eine Seriell-Parallel-Wandlung vor, so daß der jeweils eingestellte Anzeigezustand bis zum nächsten Steuerzyklus erhalten bleibt. Die Anzeigeelemente werden dabei einzeln angesteuert, und die Schieberegister sind zeitlich hintereinander geschaltet. Dies hat zur Folge, daß bei einer sehr großen Anzahl von Anzeigeelementen ein Anzeigezyklus lange dauern kann, wenn nicht eine entsprechend hohe Geschwindigkeit der seriellen Übertragung gewählt wird. Außerdem ergibt sich bei einer derartigen Anordnung, daß alle Anzeigezustände fortlaufend zyklisch übertragen werden müssen, oder daß bei der Änderung nur eines Zustandes der Zustand aller anderen Anzeigeelemente zusätzlich auch übertragen werden muß. Es muß also regelmäßig auch dann eine größere Menge von Informationen übertragen werden, wenn sich nur wenig ändert.

Ausgehend vom vorgenannten Stand der Technik besteht die Aufgabe der Erfindung darin, eine Schaltungsanordnung vorzustellen, womit es möglich ist, die Menge zu übertragenden Informationen auf ein Minimum zu beschränken. Außerdem soll erreicht werden, daß der Steuerungs- und Speicheraufwand auch bei einer größeren Anzahl von Anzeigeelementen in vertretbaren Grenzen gehalten wird. Die Anzeigefelder sollen blockweise erweitert werden können, ohne daß zusätzlicher Steuerungsaufwand entsteht, wobei lediglich zusätzliche Speicher angeordnet werden müssen.

Diese Aufgabe wird durch eine Merkmalskombination gelöst, wie sie im Patentanspruch 1 angegeben ist.

Damit wird in vorteilhafter Weise erreicht, daß eine Anzeigeeinrichtung für einen Vermittlungsapparat oder Vermittlungsplatz als selbständig arbeitende Einrichtung die Anzeigeinformation optisch darstellen kann und daß eine Informationsübertragung nur dann stattfinden muß, wenn sich die Zustände von Anzeigeelementen ändern. Auch bei einer größeren Anzahl von Anzeigeelementen ist der Steuerungs- und Speicheraufwand relativ gering und bei Erweiterungen müssen lediglich zusätzliche Speicher angeordnet werden.

In den Unteransprüchen sind vorteilhafte Weiterbildungen der Erfindung angegeben.

Ein Ausführungsbeispiel der Erfindung wird nachfolgend anhand einer Zeichnung näher erläutert.

Bei dem in der Zeichnung dargestellten Blockschaltbild ist ein Eingaberegister ER gezeigt, welches über einer Datenleitung DL die von einem Vermittlungsapparat oder -platz kommenden Anzeigeinformationen seriell empfängt. Die parallelen Ausgänge des Eingaberegisters ER sind mit einer Steuereinrichtung SE verbunden. Von der Steuereinrichtung SE wird ein Zustandsspeicher ZSP zyklisch angesteuert, wozu ein Zeilenzähler ZZ dient. Außerdem wird von der Steuereinrichtung SE aus eine Umwerteeinrichtung UM gesteuert, so daß die im Zustandsspeicher ZSP befindliche Information entweder gleich bleibt oder verändert wird. Die Ausgänge des Zustandsspeichers ZSP werden über die Umwerteeinrichtung UM einem Spaltenspeicher SSP zugeführt, welcher vorübergehend den Inhalt einer Zeile Z des Zustandsspeichers ZSP aufnehmen kann. Die Ausgänge des Spaltenspeichers SSP sind mit Spaltenschalter SS1 bis SSn verbunden, welche ein positives Potential an eine Spalte der Diodenmatrix DM anlegen, wenn das entsprechende Bit im Spaltenspeicher SSP gesetzt ist. Die Zeilen DZ1 bis DZm der Diodenmatrix DM werden über Zeilenschalter ZS1 bis ZSm mit dem Gegenpotential angesteuert, wenn aus einer Decodierung DEZ das Zeilensignal erscheint, welches für die Ansteuerung des Zustandsspeichers ZSP von einem Zeilenzähler ZZ geliefert wird.

Wenn über die Datenleitung DL im Eingangsregister ER Befehle und Adressen empfangen werden, womit das Einschalten von Anzeigeelementen AE bewirkt werden soll, so werden diese zunächst der Steuereinrichtung SE zugeleitet. Aus der Befehlsinformation gewinnt die Steuereinrichtung SE einen Einschaltbefehl EIN sowie die Zeilenadresse und die Einzeladresse EA für das betreffende Anzeigeelement AE. Wenn beim zyklischen Auslesen des Zustandsspeichers ZSP, vom Zeilenzähler ZZ diejenige Zeilenadresse geliefert wird, wo sich das einzuschaltende Anzeigeelement AE befindet, so wird in der Steuereinrichtung SE ein Bitmuster gebildet, welches an der dem Anzeigeelement AE entsprechenden Stelle eine logische Eins aufweist. Dieses Bitmuster gelangt an die Umwerteeinrichtung UM und von dort aus in den Spaltenspeicher SSP. Wenn nun beispielsweise an der zweiten Stelle im Bitmuster eine logische Eins gesetzt ist, so wird der Spaltenschalter SS2 eingeschaltet. Da gleichzeitig der Zeilenschalter, z. B. ZS1 das Gegenpotential liefert, wird das zweite Anzeigeelement AE in der ersten Diodenzeile DZ eingeschaltet und leuchtet auf.

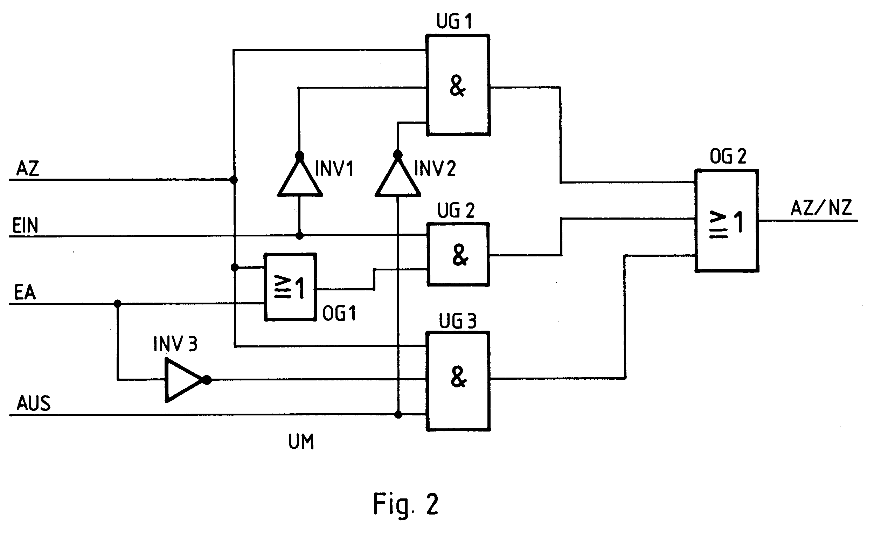

Anhand der Fig. 2 wird nun erläutert, auf welche Weise das Ein- und Ausschalten von Anzeigeelementen AE geschieht, wobei die in Fig. 2 gezeigte Anordnung nur für ein Bit dargestellt ist. Diese Anordnung ist für jede einzelne Spalte der Diodenmatrix DM einmal vorzusehen. Die hier dargestellten Gatterfunktionen können als gemeinsamer integrierter Schaltkreis durch Programmierung hergestellt werden. Es ist jedoch auch denkbar, diese Funktion durch einen Mikroprozessor zu realisieren.

Wenn im Ruhezustand der gesamten Schaltungsanordnung keine Veränderungen stattfinden, so wird der jeweils alte Zustand AZ eines Bits, so wie er aus dem Zustandsspeicher ZSP durch einen Lesebefehl L zyklisch abgerufen wird, über das UND-Gatter UG1 und das ODER-Gatter OG2 direkt an den Ausgang geschaltet, so daß auch im Spaltenspeicher SSP das gleiche Bitmuster erscheint, wie es aus dem Zustandsspeicher ZSP ausgelesen wurde. Dieser zuvor beschriebene Weg innerhalb der Umwerteeinrichtung über das UND-Gatter UG1 ist dann geöffnet, wenn weder ein Einschaltbefehl EIN noch ein Ausschaltbefehl AUS vorliegt. Nur dann ist das UND-Gatter UG1 geöffnet, weil die beiden Inverter INV1 und INV2 das dazu notwendige Potential liefern. Der alte Zustand AZ, so wie er aus dem Zustandsspeicher ZSP ausgelesen wird, gelangt dann unverändert zum Spaltenspeicher SSP.

Wenn für ein Anzeigeelement AE ein Einschaltbefehl EIN vorliegt, so wird über den Inverter INV1 das UND-Gatter UG1 gesperrt. Gleichzeitig wird mit dem Einschaltbefehl EIN ein weiteres UND-Gatter UG2 geöffnet, so daß die Einzeladresse EA mit dem alten Zustand AZ, welche in einem ODER-Gatter OG1 verknüpft wird, am Ausgang des UND-Gatters UG2 erscheinen kann. Dadurch erscheint am Ausgang des ODER-Gatters OG2 der neue Zustand NZ. Dieser neue Zustand NZ wird auch an den Eingang des Zustandsspeichers ZSP angelegt und mit Schreibbefehl S in den Zustandsspeicher ZSP übernommen, so daß beim nächsten Auslesezyklus dieser Zustand vorliegt und das betreffende Anzeigeelement AE eingeschaltet bleibt.

Wenn ein Ausschaltbefehl AUS vorliegt, entsteht ebenfalls ein neuer Zustand NZ, wozu ein weiteres UND-Gatter UG3 vorgesehen ist. In diesem UND-Gatter UG3 wird der alte Zustand AZ, der Ausschaltbefehl AUS und die invertierte Einzeladresse EA verknüpft. Zur Invertierung der Einzeladresse EA ist ein Inverter INV3 vorgesehen. Da der Ausgang des UND-Gatters UG3 mit einem Eingang des ODER-Gatters OG2 verbunden ist, erscheint nun der neue Zustand NZ. Dies bedeutet, daß bei einem Ausschaltbefehl AUS das für ein auszuschaltendes Anzeigeelement AE zuständige Bit gelöscht worden ist. Wie bereits zuvor beschrieben wurde, wird dieser neue Zustand NZ in die entsprechende Zeile Z des Zustandsspeichers ZSP eingeschrieben, so daß dieser Zustand beim nächsten Zyklus in der Diodenmatrix DM erscheint.

Wenn ein Ein- oder Ausschaltbefehl für mehrere Anzeigeelemente AE über die Datenleitung DL empfangen wird, so werden in der Steuereinrichtung SE einzelne Befehle gebildet, welche jeweils einem Bit zugeordnet werden. Die Umwerteeinrichtung UM, wie sie in Fig. 2 dargestellt ist, wird dann in der zuvor beschriebenen Weise aktiviert. Somit ist gewährleistet, daß sich der Zustand mehrerer Anzeigeelemente AE quasi gleichzeitig ändern kann. Wenn ein Einschaltbefehl für das Prüfen der gesamten Diodenmatrix DM empfangen wird, so wird dieser in der Steuereinrichtung SE in Einzelbefehle umgesetzt. Es können dann Anzeigemuster gebildet werden, womit erkannt werden kann, daß alle Anzeigeelemente AE funktionstüchtig sind. Mit einer derartigen Einstellung könnten auch großflächige Anzeigemuster gebildet werden.

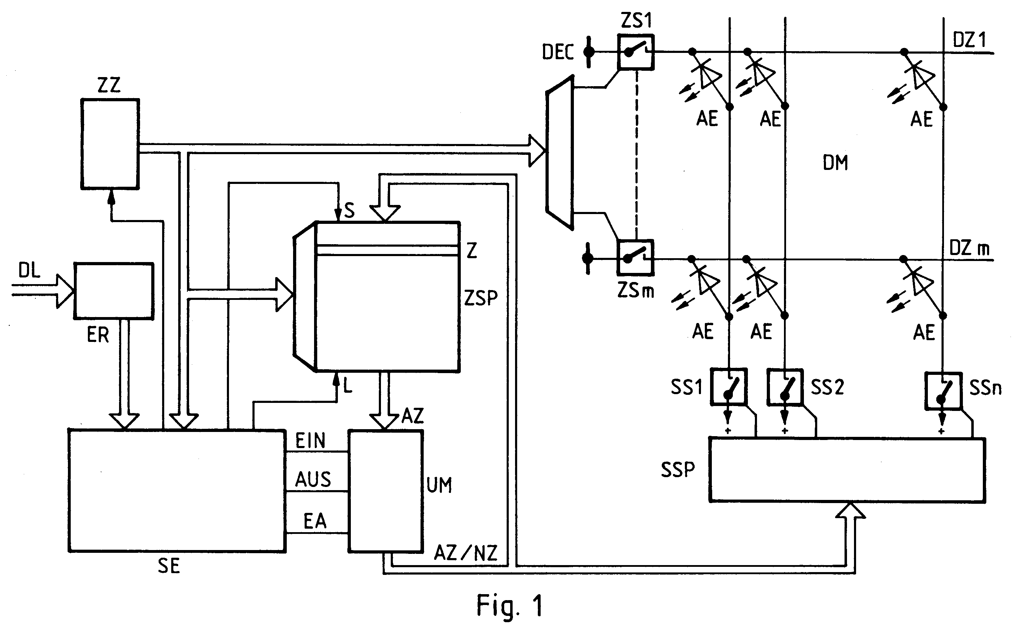

Wenn ein Anzeigeelement lediglich entweder ausgeschaltet ist oder stetig leuchtet, so lassen sich damit nur zwei Zustände anzeigen. Wenn weitere Zustände, welche beispielsweise bei einem Fernsprechanschluß vorherrschen können, angezeigt werden sollen, so kann das betreffende Anzeigeelement AE auch flackernd eingeschaltet werden. Ein über die Datenleitung DL empfangener Befehl, der das Einstellen eines derartigen Zustandes charakterisiert, wird in der Steuereinrichtung SE in einzelne Einschalt- und Ausschaltbefehle EIN/AUS umgesetzt. Diese Befehle werden mit Flackertakten verknüpft, wobei verschiedene Rythmen denkbar sind, so daß sich zusätzliche Varianten ergeben. Auch dabei ändert sich nichts an der Funktion der in der Fig. 1 dargestellten Schaltungsanordnung. Auch die Umwerteeinrichtung UM funktioniert in der gleichen vorbeschriebenen Weise.

Die Schaltungsanordnung ist so ausgelegt, daß Erweiterungen leicht möglich sind. Wenn mehr Diodenzeilen DZ1 bis DZm angeordnet werden sollen, so muß der Zustandsspeicher ZSP mit entsprechend mehr Zeilen Z ausgestattet werden. Dabei verlängert sich allerdings der Auslesezyklus, so daß mit einer höheren Frequenz gearbeitet werden muß, damit die als Anzeigeelemente AE verwendeten Leuchtdioden oft genug angesteuert werden können. Die Diodenmatrix DM kann auch durch das Hinzufügen von weiteren Spalten vergrößert werden, wobei zusätzliche Spaltenspeicher SSP notwendig werden. Dementsprechend müssen die Zeilen Z des Zustandsspeichers ZSP verbreitert werden. Dies kann durch Paralellschalten eines weiteren Zustandsspeichers ZSP geschehen. Damit ist eine Diodenmatrix DM blockweise erweiterbar, wobei die Zeilenzahl beibehalten werden kann.

**Patentansprüche**

1. Schaltungsanordnung zur Ansteuerung von matrixförmig angeordneten Anzeigeelementen an Vermittlungsapparaten oder Vermittlungsplätzen von Kommunikations-Vermittlungsanlagen, wobei eine serielle Übertragung der Zustandsdaten von der Vermittlungsanlage zu dem Vermittlungsapparat oder -platz erfolgt, unter denen sich auch die für eine Anzeige notwendigen Informationen befinden, die zur Steuerung der einzelnen Anzeigeelemente verwendet werden, dadurch gekennzeichnet,
daß ein vom Vermittlungsapparat oder -platz gesteuerter aber selbsttätig arbeitender Anzeigemodul vorgesehen ist, der ein Empfangsregister (ER), einen Zustandsspeicher (ZSP), einen Spaltenspeicher (SSP) und eine Steuereinrichtung (SE) enthält,
daß der Zustandsspeicher (ZSP) zyklisch angesteuert wird, wobei der Inhalt einer jeden Zeile (Z) vorübergehend in den Spaltenspeicher (SSP) geladen wird, um die Diodenzeilen (DZ1 bis DZn) und die Diodenspalten (DSP1 bis DSPn) einer Leuchtdioden-Matrix (DM) koinzidierend mit Strom zu beschicken, damit die gewünschten Anzeigeelemente aufleuchten,
daß nur bei Änderungen des Anzeigezustandes Befehle im Empfangsregister (ER) empfangen werden, welche über die Steuereinrichtung (SE) zu einer Umwerteeinrichtung (UM) gelangen, wo bei einem Einschaltbefehl (EIN) für ein Anzeigeelement (AE) dessen Einzeladresse (EA) mit dem aus dem Zustandsspeicher (ZSP) ausgelesenen vorherigen Zustand (AZ) verknüpft wird, und bei einem Ausschaltbefehl (AUS) dessen invertierte Einzeladresse (EA) mit dem vorherigen Zustand (AZ) verknüpft wird,
und daß der jeweils neue Zustand (NZ) in den Zustandsspeicher (ZSP) übertragen wird.

2. Schaltungsanordnung nach Anspruch 1, dadurch gekennzeichnet, daß für jede Diodenzeile (DZ1 bis DZm) ein Bitmuster gebildet wird, welches in eine der jeweiligen Diodenzeile (DZ1 bis DZm) entsprechende Zeile (Z) des Zustandsspeichers (ZSP) eingeschrieben wird.

3. Schaltungsanordnung nach Anspruch 1, dadurch gekennzeichnet, daß mit jeweils einem einzigen Einschalt- oder Ausschaltbefehl (EIN/AUS) der Zustand von mehreren Anzeigeelementen (AE) gleichzeitig geändert werden kann.

4. Schaltungsanordnung nach Anspruch 1,

dadurch gekennzeichnet,
daß besondere Bitmuster gebildet werden, wenn der Einschaltbefehl (EIN) für eine Prüfung der gesamten Diodenmatrix (DM) gegeben wird.

5.  Schaltungsanordnung nach Anspruch 1, dadurch gekennzeichnet,
daß ein empfangener Befehl zum flackernden Einschalten eines Anzeigeelementes (AE) von der Steuereinrichtung (SE) in aufeinander folgende Ein- und Ausschaltbefehle (EIN/AUS) umgesetzt wird, wobei diese Befehle mit einem Flackertakt verknüpft werden.

Fig. 1

EP 0 464 418 A2

AZ/NZ

OG 2  ≥1

UG 1  &

INV2

UG 2  &

INV1

OG1  ≥1

UG 3  &

INV 3

UM

AZ

EIN

EA

AUS

Fig. 2